# EUROPÄISCHE PATENTANMELDUNG

(11) **EP 4 597 768 A1**
(43) Veröffentlichungstag der Anmeldung: **06.08.2025**
(21) Anmeldenummer: 25155369.9
(22) Anmeldetag: 31.01.2025
(51) Int. Cl.: H02B 1/56, H01M 8/2475

(54) **EINHAUSUNG FÜR KOMPONENTEN EINER TECHNISCHEN ANLAGE**

(30) Priorität: 31.01.2024 DE 102024102703
(71) Anmelder: Deutsche Bahn AG, 80634 München (DE)
(72) Erfinder: Adolf, Björn, verstorben (DE); Diebel, Ralf, 04509 Wiedemar OT Pohritzsch (DE); Wiesbeck, Florian, 91757 Treuchtlingen (DE); Luckau, Frank, 06869 Coswig OT Cobbelsdorf (DE); Alemanno, Mario, 86169 Augsburg (DE); Elsner, Dirk, 13187 Berlin (DE); Stemmer, Herbert, 81373 München (DE)

(57) **Zusammenfassung**

Es wird eine Einhausung (10) für eine technische Anlage (40) bereitgestellt, die einen einen Innenraum aufweisenden Korpus (11) und wenigstens eine Tür (12, 13) umfasst. Dabei weist die Einhausung (10) zumindest eine Trennwand (23) auf, die den Innenraum in zumindest zwei Zonen (14, 15, 16) aufteilt. Erfindungsgemäß weist die Einhausung (10) zumindest einen Lüftungskanal (18, 28, 29, 33) auf, der in wenigstens zwei Zonen (14, 15, 16) hineinragt, jedoch nur mit einer dieser Zonen (14, 15, 16) hermetisch verbunden ist.

## Beschreibung

Die vorliegende Erfindung betrifft eine Einhausung für Komponenten einer technischen Anlage nach dem Oberbegriff des Anspruchs 1, sowie eine Anlage.

Im Stand der Technik sind Outdoorschränke bekannt. So zeigt beispielsweise die DE 10 2020 115 849 A1 eine Überdachung für einen derartigen Schrank. Der Schrank ist dazu ausgebildet, im Freien zu stehen und dabei einer in seinem Innenraum angeordneten Einrichtung Schutz vor äußeren Einflüssen, insbesondere vor Regen, Wind, Schnee, Hagel, Staub, Kälte, Wärme Licht und Lärm zu bieten. Der Schrank besitzt dazu beispielsweise ein quaderförmiges Gehäuse mit einem Dach und vier senkrecht zum Dach angeordneten vertikalen Gehäuseseiten. Bei dem Gehäuse sind auf einer der Gehäuseseiten zwei sich gegenläufig, nach außen öffnende Türen angeordnet. Die Türen sind an der gleichen Gehäuseseite angeschlagen.

Aus der DE 10 2008 019 981 A1 geht ein Schrank hervor, der insbesondere mit einem Rahmen für einzelne Einschübe ausgestattet ist, so dass eine Energieversorgungseinheit, die mit einem Brennstoffzellenstapel ausgestattet ist, an dem Einschub, insbesondere in normierter Weise, montiert werden kann. Zur Förderung der Montierbarkeit hat der Schrank besondere Luftführungskanäle.

Die DE 20 2015 008 770 U1 offenbart eine Schaltschrankanordnung zur Aufnahme elektrischer Bauteile, die wenigstens einen Kühlluftkanal aufweist, mittels dessen Kühlluft in der Schaltschrankanordnung verteilt werden kann, wobei die Schaltschrankanordnung wenigstens ein Schranksegment umfasst, das mit wenigstens einer Schranktür versehen ist, die um eine Schwenkachse schwenkbar ist, um den Zugriff auf den für elektrische Bauteile vorgesehenen Schrankinnenraum zu ermöglichen, wobei wenigstens ein Kanalabschnitt an der Schranktür befestigt ist und gemeinsam mit der Schranktür um die Schwenkachse schwenkbar ist, wobei der Kanalabschnitt an der schwenkbar angebundenen Seite der Schranktür an eine Zu- oder Abströmöffnung angeschlossen ist, zumindest wenn die Schranktür geschlossen ist.

Die DE 102022131680 A1 zeigt ein modular aufgebautes Energiesystem zur Gestaltung eines aus Einzelkomponenten aufgebauten Gesamtsystems, insbesondere eines Gebäudeenergiesystems, wobei das Energiesystem als eine erste Komponente eine Kurzzeitspeichereinrichtung zur Speicherung elektrischer Energie aufweist, wobei das Energiesystem als eine zweite Komponente eine Langzeitspeichereinrichtung zur Speicherung von Wasserstoff aufweist, wobei das Energiesystem als eine dritte Komponente eine Brennstoffzelleneinrichtung aufweist, und wobei das Energiesystem als eine vierte Komponente eine Elektrolyseeinrichtung aufweist, die zur Erzeugung von Wasserstoff bereitgestellt ist. Um das Energiesystem an sich ändernde Gegebenheiten anpassen zu können, ist realisiert, dass zumindest die Kurzzeitspeichereinrichtung modular aufgebaut ist und eine Anzahl von Energie-Speichermodulen aufweist, die über Verbindungsstellen individuell gestaltbar zu der Kurzzeitspeichereinrichtung zusammengesetzt oder zusammensetzbar sind, und dass die Langzeitspeichereinrichtung modular aufgebaut ist und eine Anzahl von Wasserstoff-Speichermodulen aufweist, die über Verbindungsstellen individuell gestaltbar zu der Langzeitspeichereinrichtung zusammengesetzt oder zusammensetzbar sind.

Die DE 10 2023 101 910 A1 offenbart ein System und ein Verfahren zur Temperierung oder Erhitzung von Speisen mit mindestens einen Raum zur Aufnahme mehrerer Trageeinrichtungen für Speisen und mindestens eine Temperiereinrichtung. Der mindestens eine Raum zur Aufnahme mehrerer Trageeinrichtungen weist mindestens eine Halteeinrichtung auf, die dazu ausgelegt ist, die Trageeinrichtung für Speisen aufzunehmen. Die Trageeinrichtungen sind in dem Raum beabstandet angeordnet. Der Raum ist in zumindest zwei Kammern unterteilt, die sich jeweils bis zu zumindest einer Seitenwand erstrecken. Zumindest eine der Trageeinrichtungen erstreckt sich über mehrere Kammern. Jede Kammer ist unabhängig temperierbar, und die Kammern sind durch eine Trennwand zueinander thermisch isoliert. Die Temperiereinrichtungen kann jeder der mindestens einen Trageeinrichtung hauptsächlich nur an vorherbestimmten Bereichen Wärmeenergie zuführen und/oder entziehen.

Der Erfindung liegt die Aufgabe zugrunde, eine verbesserte Einhausung bereitzustellen.

Gelöst wird diese Aufgabe mit einer Einhausung nach Anspruch 1 und einer Anlage nach Anspruch 6. Vorteilhafte Weiterbildungen der Erfindung sind in den Unteransprüchen angegeben.

Die erfindungsgemäße Einhausung für eine technische Anlage, umfasst einen einen Innenraum aufweisenden Korpus und wenigstens eine Tür. Dabei weist die Einhausung zumindest eine Trennwand auf, die den Innenraum in zumindest zwei Zonen aufteilt. Insbesondere sind die zumindest zwei Zonen bei geschlossener Tür hermetisch voneinander getrennt. Erfindungsgemäß umfasst die Einhausung zumindest einen Lüftungskanal, der in wenigstens zwei Zonen hineinragt, jedoch nur mit einer dieser Zonen hermetisch verbunden ist.

Damit ist es vorteilhaft ermöglicht, die Zonen unterschiedlich zu klimatisieren beziehungsweise zu belüften. Damit kann vorteilhaft Energie zum Wärmen und Lüften gespart werden. Durch die erfindungsgemäße Gestaltung des Innenraums, werden die ansonsten durch eine Schrankbelüftung auftretenden Kamineffekte die zum auskühlen des Schrankes geführt haben vorteilhaft vermieden. Somit haben beispielsweise in der Einhausung gelagerte Batterien bei niedrigen Außentemperaturen mehr Kapazität und sind weniger Alterung unterworfen.

Mit dem zumindest einem Lüftungskanal wird für eine verhältnismäßig kleine Zone in der Einhausung eine relativ große Lüftungsfläche bereitgestellt. Auch die Anordnung der Zonen innerhalb der Einhausung erhält mehr Freiheiten. Insbesondere kann dadurch die Zuluft für eine in der Einhausung angeordnete Zone oberhalb einer bestimmten Schneehöhe angeordnet sein, auch wenn die Zone selbst unterhalb dieser Schneehöhe liegt. Eine kompaktere und kostengünstige Bauweise der Einhausung ist ermöglicht und ihr Einsatzbereich erweitert. Zudem ist ein energiesparender Betrieb ermöglicht.

In einer weiteren vorteilhaften Ausgestaltung der erfindungsgemäßen Einhausung weist diese ein vom Korpus beabstandet angeordnetes Leitblech auf.

Damit ist es vorteilhaft ermöglicht Winddruck von hinter dem Leitblech angeordneten Luftauslässen zu nehmen und die Lüftung mit weniger Energieaufwand zu betreiben. Durch das Leitblech kann zudem warme Abluft zielgerichtet geleitet und genutzt werden.

In einer weiteren vorteilhaften Ausgestaltung der erfindungsgemäßen Einhausung weist diese ein Podest auf, welches verschiebbare Aufnahmeelemente umfasst.

Mit den verschiebbaren Aufnahmeelementen des Podests ist es einfach möglich, Ausstattung in die Einhausung einzubringen und an diese heranzukommen, beispielsweise für Wartungsarbeiten. Da die auf den verschiebbaren Aufnahmeelementen angeordnete Ausstattung nach dem Herausziehen der Aufnahmeelemente gut zugänglich ist, kann das Packaging optimiert werden, was wiederum der Energieversorgung zugutekommt.

In einer weiteren vorteilhaften Ausgestaltung der erfindungsgemäßen Einhausung weist diese ein Schwenkteil auf, welches an einer vertikalen Achse schwenkbar gelagert ist.

Auch das Schwenkteil bietet gegenüber einem festverbauten Teil den Vorteil der besseren Zugänglichkeit, insbesondere zum Bereich hinter dem Schwenkteil.

In einer weiteren vorteilhaften Ausgestaltung der erfindungsgemäßen Einhausung weist diese ein in einer zweiten Zone ein Rack zur Aufnahme zumindest eines Brennstoffzellenmoduls auf. Das Rack ist bevorzugt thermisch isoliert.

Mit dem Rack ist eine flexible Luftführung ohne Luftkanal ermöglicht, auch bei tiefen Temperaturen.

Die erfindungsgemäße Anlage umfasst die Einhausung. Die Anlage umfasst zudem ein in einer zweiten Zone der Einhausung angeordnetes Brennstoffzellenmodul und eine in einer dritten Zone der Einhausung angeordnete Steuereinheit.

Mit der Anlage ist es vorteilhaft ermöglicht netzunabhängig verlässlich Energie bereitzustellen, insbesondere als Netzersatzanlage. Die Vorteile der Einhausung kommen der Anlage zugute.

In einer vorteilhaften Ausgestaltung der erfindungsgemäßen die Anlage umfasst diese eine in einer ersten Zone angeordnete Anschlussvorrichtung für mit Wasserstoff befüllte Druckbehälter. Die Anschlussvorrichtung ist dabei zum Anschluss mehrerer Druckbehälter, bevorzugt Gasflaschen, ausgebildet.

Damit sind die Druckbehälter mit dem Wasserstoff in die Einhausung integrierbar. Die Anlage ist damit autark.

In einer weiteren vorteilhaften Ausgestaltung der erfindungsgemäßen Anlage umfasst diese eine Testlasteinheit und ist dazu ausgebildet, einen Testbetrieb durchzuführen, bei dem von der Anlage erzeugte elektrische Energie von der Testlasteinheit aufgenommen wird.

Das ermöglicht es, mit der Anlage Testläufe durchzuführen auch ohne dafür externe Abnehmer zur Verfügung zu haben. Zudem lässt sich mit der Testlasteinheit in einem Normalbetrieb im Bedarfsfall eine Testlast zuschalten, wenn der externe Abnehmer weniger als eine Mindestleistung aufnimmt.

In einer vorteilhaften Ausgestaltung der erfindungsgemäßen Anlage ist diese dazu ausgebildet, einen Normalbetrieb oder den Testbetrieb durchzuführen und dafür aus unterschiedlichen Druckbehältern Wasserstoff zu entnehmen.

Damit sind vorteilhaft zumindest zwei verschiedene Druckbehälter verfügbar, von denen einer allein für den Normalbetrieb zur Verfügung steht und der andere für den Testbetrieb und insbesondere auch für den Normalbetrieb. Die für den Normalbetrieb bereitgehaltene Kapazität an Wasserstoff wird somit für Testläufe nicht verwendet und bleibt erhalten. Dadurch ist vorteilhaft eine vordefinierte Betriebsdauer im Normalbetrieb jederzeit möglich, unabhängig von der Anzahl zuvor durchlaufener Testbetriebe.

In einer weiteren vorteilhaften Ausgestaltung der erfindungsgemäßen Anlage weist diese eine Druckbehältertemperaturmesseinrichtung auf. Diese ist dazu ausgebildet, die Temperatur zumindest eines der Druckbehälter zu ermitteln.

Damit ist es vorteilhaft ermöglicht eine verbesserte Leckageprüfung durchzuführen.

Weitere Vorteile der vorliegenden Erfindung sind aus der detaillierten Beschreibung und den Abbildungen ersichtlich. Die Erfindung wird anhand der Abbildungen und der nachfolgenden Beschreibung näher erläutert. Es zeigen:
- Figur 1: eine erfindungsgemäße Einhausung in einer beispielhaften Ausgestaltung;
- Figur 2: eine beispielhafte Tür der Einhausung;
- Figur 3: eine Prinzipskizze eines beispielhaften Lüftungskanals der Einhausung;
- Figur 4: die Einhausung in einer beispielhaften Seitenansicht;
- Figur 5: eine Detailansicht zu weiteren beispielhaften Ausgestaltungsmerkmalen der Einhausung; und
- Figur 6: eine erfindungsgemäße Anlage in einer beispielhaften Ausgestaltung.

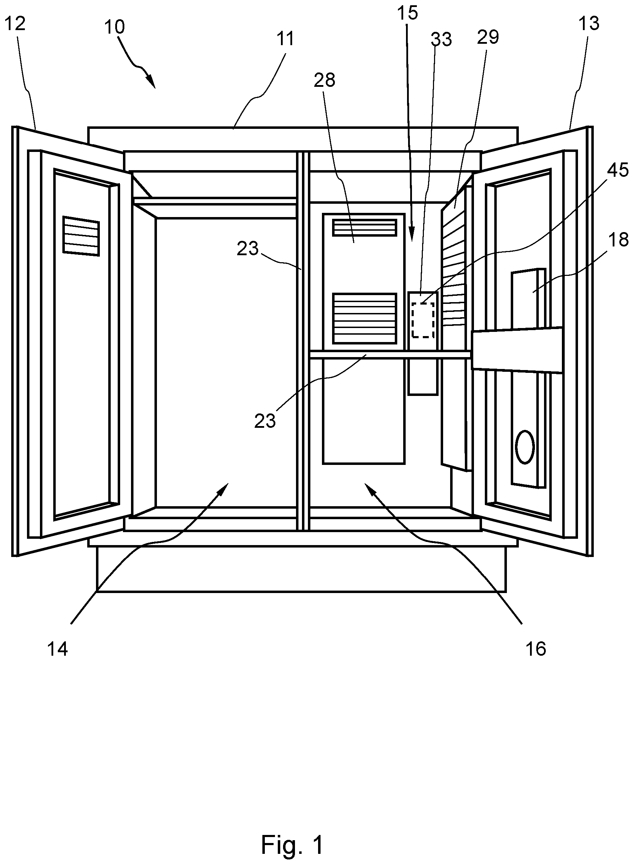

In der Figur 1 ist die erfindungsgemäße Einhausung 10 in einer beispielhaften Ausgestaltung in einer Ansicht von vorne schematisch dargestellt. Die erfindungsgemäße Einhausung 10 ist zur Aufnahme von Komponenten einer technischen Anlage 40 vorgesehen. Die technische Anlage 40 dient bevorzugt der Erzeugung elektrischer Energie aus Wasserstoff mittels Brennstoffzellentechnik. Der Wasserstoff ist dabei bevorzugt in wenigstens einen Druckbehälter 50 gespeichert.

Die Einhausung 10 umfasst einen im Wesentlichen quaderförmigen Korpus 11, der an seiner Vorderseite bevorzugt eine erste Tür 12 und eine zweite Tür 13 aufweist. Die Türen 12, 13 sind insbesondere gegenläufig zu öffnen. Im inneren des Korpus 11 ist zumindest eine Trennwand 23 angeordnet, sodass der Innenraum des Korpus 11 in wenigstens zwei verschiedene Zonen geteilt ist. Die zumindest zwei Zonen 14, 15, 16 sind durch die Trennwand 23 bevorzugt luftdicht voneinander getrennt.

Die zumindest eine Trennwand 23 kann dabei vertikal oder horizontal angeordnet sein. Bevorzugt weist die Einhausung 10 zwei Trennwände 23 auf, eine vertikal ausgerichtete und eine horizontal ausgerichtete, womit eine erste Zone 14, eine zweite Zone 15 und eine dritte Zone 16 ausgebildet sind. Die Trennwände 23 sind bevorzugt jeweils mit zumindest einem Dichtungsgummi versehen. Die drei Zonen 14, 15, 16 unterscheiden sich dabei in ihren klimatischen Anforderungen. Sie sind mithin als unterschiedliche Klimazonen ausgebildet.

Dier erste Zone 14 ist bevorzugt zur Aufnahme von Druckbehältern 50, insbesondere Gasflaschen, vorgesehen. Die erste Zone 14 ist bevorzugt zur Aufnahme von neun Gasflaschen ausgebildet. Die zweite Zone 15 ist bevorzugt zur Aufnahme von Brennstoffzellenmodulen 42 vorgesehen. Die dritte Zone 16 ist bevorzugt zur Aufnahme elektrotechnischer Vorrichtungen, wie insbesondere einer Steuereinheit 43, vorgesehen.

Die Einhausung 10 umfasst bevorzugt wenigstens einen Lüftungskanal 18, 28, 29, 33. In der abgebildeten Ausgestaltung umfasst die Einhausung 10 einen ersten Lüftungskanal 18, einen zweiten Lüftungskanal 28, einen dritten Lüftungskanal 29 und einen vierten Lüftungskanal 33.

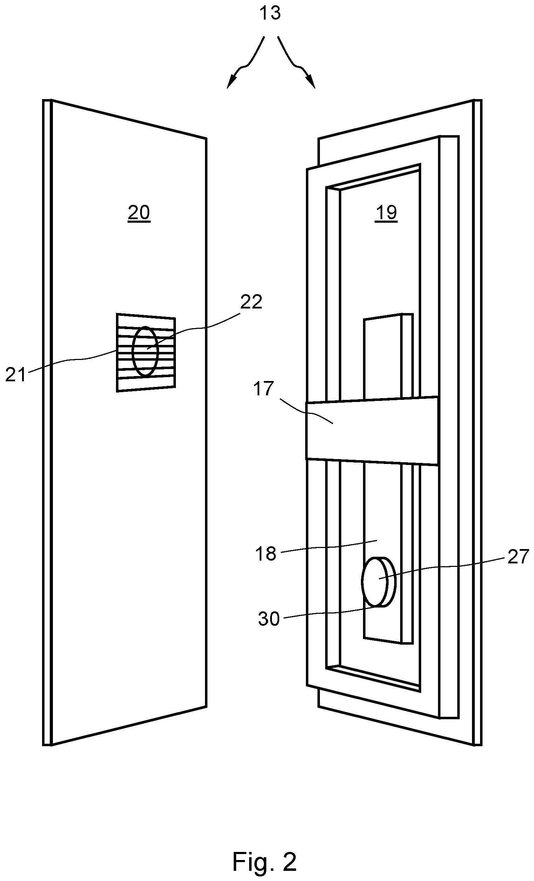

Figur 2 zeigt die zweite Tür 13 der Einhausung 10 schematisch in zwei Ansichten von ihrer Innenseite 19 und von ihrer Außenseite 20. In der zweiten Tür 13 ist bevorzugt einer der Lüftungskanäle 18, 28, 29, 33 angeordnet. Durch die zweite Tür 13 ist der Zugang zur zweiten Zone 15 und zur dritten Zone 16 ermöglicht. Damit die zweite Zone 15 zur dritten Zone abgedichtet ist, umfasst die zweite Tür eine Abdichtung 17, die, wenn die zweite Tür 13 geschlossen ist, an der horizontalen Trennwand 23 anliegt. Diese Abdichtung 17 ist dabei insbesondere zumindest zum Teil aus einer Umwandung des ersten Lüftungskanals 18 gebildet. Die Abdichtung 17 bietet einen sicheren und komfortablen horizontalen Dichtungsabschluss (Gummilippe) durch die horizontale Trennung in zwei Klimazonen, hier die zweite Zone 15 und die dritte Zone 16.

In diesem Beispiel ist der erste Lüftungskanal 18 an der Innenseite 19 der zweiten Tür 13 zur Belüftung der dritten Zone 16 angeordnet. Der erste Lüftungskanal 18 ist dabei durch die Abdichtung 17 hindurchgeführt. Sie ist dazu insbesondere etwas flacher ausgebildet als die Abdichtung 17. Beziehungseise ist der erste Lüftungskanal 18 selbst Teil der Abdichtung 17. Der erste Lüftungskanal 18 ist, wie die anderen Lüftungskanäle 28, 29, 33 insbesondere als Flachkanal ausgebildet und vertikal ausgerichtet. Der erste Lüftungskanal 18 umfasst einen Lufteinlass 22 im Bereich der zweiten Zone 15, der nach außen offen ist und zur zweiten Zone 15 hin geschlossen ist, und einen Luftauslass 30, im Bereich der dritten Zone 16, der zur dritten Zone 16 hin offen ist. Der Lufteinlass 22 kann mit einem Lüftungsgitter 21 versehen sein. Mit Lüftungsgitter 21 sollen hier auch Vorrichtungen wie Lüftungskiemen erfasst sein. Der erste Lüftungskanal 18 ist mit einem Ventilator 27 versehen, der insbesondere am Luftauslass 30 angeordnet ist. Der Lufteinlass 22 ist insbesondere oberhalb einer Höhe von 1,5 m angeordnet. So, dass selbst bei einer Schneehöhe von bis zu 1,5m an der Einhausung anliegend die Frischluftzufuhr zur dritten Zone 16 sichergestellt ist.

Der Ventilator 27 verfügt insbesondere über eine temperaturabhängige Drehzahlregelung. Wobei sowohl die Temperatur in der dritten Zone 16 als auch die Außentemperatur berücksichtigt ist. Eine Solltemperatur in der dritten Zone 16 ist dabei veränderbar.

Zwischen der zweiten Zone 15 und der dritten Zone 16 ist hierbei bevorzugt eine nicht dargestellte Lüftungsklappe im vierten Lüftungskanal 33 angeordnet, die sich beim Betrieb des Ventilators 27 öffnet, insbesondere gegen eine Federkraft. Der vierte Lüftungskanal 33 leitet die Abluft aus der dritten Zone 16 nach außen und besitzt keine Öffnung hin zur zweiten Zone 15. Die Lüftungsklappe ist dafür da, dass die Wärme aus der unteren, beheizten dritten Zone 16 nicht einfach nach oben entweicht. Bei nötiger Kühlung, mithin wenn der Ventilator 27 läuft, öffnet die Lüftungsklappe ohne Ansteuerung aufgrund der Druckverhältnisse und Zuluft kann durch den ersten Lüftungskanal 18 strömen.

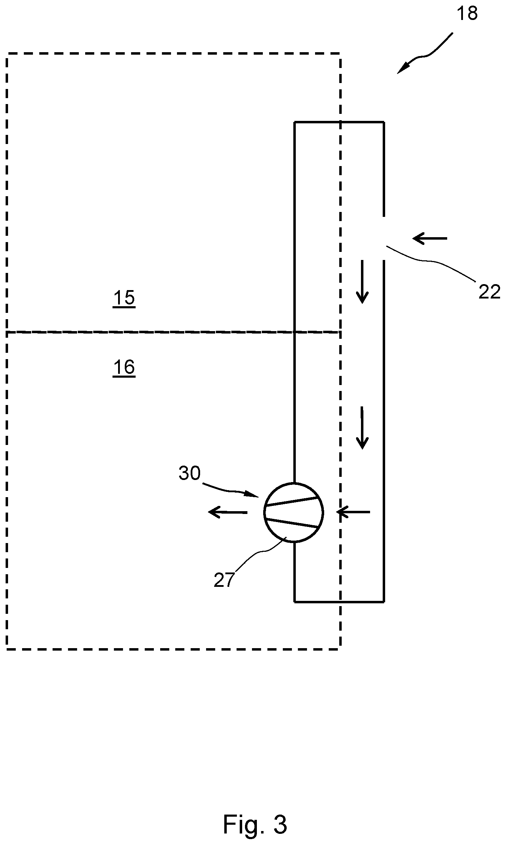

Das Prinzip der hier verwendeten Lüftungskanäle 18, 28, 29, 33 ist in der Figur 3 anhand des ersten Lüftungskanals 18 skizziert. Die Lüftungskanäle 18, 28, 29, 33 ragen jeweils in zumindest zwei Klimazonen und weisen dabei jeweils nur zu einer dieser Klimazonen hin eine Öffnung, mithin einen Lufteinlass 22 und/oder Luftauslass 30, auf. Die Lüftungskanäle 18, 28, 29, 33 sind mithin mit jeweils nur einer der Zonen 14, 15, 16 hermetisch verbunden. In der Figur 3 ist der erste Lüftungskanal 18 vertikal angeordnet und ragt in die zweite Zone 15 und in die dritte Zone16. Nur zur dritten Zone 16 hin weist der erste Lüftungskanal 18 eine Öffnung auf, die hier als Luftauslass 30 fungiert und an der insbesondere der Ventilator 27 angeordnet ist. In der zweiten Zone 15 weist der erste Lüftungskanal 18 keine Öffnung 22, 30 auf. Die zweite Öffnung des ersten Lüftungskanals 18, die hier als Lufteinlass 22 fungiert, ist außen angeordnet. So ist erreicht, dass der Lufteinlass 22 außen an der Einhausung 10 in einem anderen Bereich platziert ist als die dritte Zone 16. Der Lufteinlass 22 des ersten Lüftungskanals 18 ist dadurch höher angeordnet, als die dritte Zone 16. Es wird mit dem ersten Lüftungskanal 18 die Fläche der zweiten Tür 13 für die Belüftung nutzbar gemacht. Die Seitenflächen des Korpus 11 stehen für weitere Belüftungen zur Verfügung.

Die Einhausung 10 umfasst mit Korpus 11 und Türen 12, 13 eine begrenzte Außenfläche. Die Zonen 14, 15, 16 weisen unterschiedliche Erfordernisse hinsichtlich der Belüftung auf. Mit den Lüftungskanälen 18, 28, 29, 33 wird erreicht, dass nicht nur die an die jeweilige Zone 13, 15, 16 grenzende Außenfläche der Einhausung 10 für die Belüftung zur Verfügung steht. Die Konstruktion der Einhausung 10 und die Konstruktion der Lüftungskanäle 18, 28, 29, 33 führt so zu einer relativ großen Fläche zur seitlichen Frischluft- (Reaktionsluft)-Ansaugung im Verhältnis zur Gesamtaußenfläche.

Zumindest einer der Lüftungskanäle 18, 28, 29, 33 ist im Inneren am Lufteinlass 22 mit einem Band versehen, welches bei Erreichen einer bestimmten Temperatur aufquillt und somit den Lufteinlass 22 verschließt. Damit ist ein Brandschutz hergestellt. Das Band ist dabei insbesondere in mehreren zueinander beabstandeten Streifen angebracht. Damit ist ein einfacher und kostengünstiger Brandschutz, der ohne eine gesonderte Ansteuerung funktioniert, bereitgestellt.

Insbesondere der zweite Lüftungskanal 28 ist im Innenraum an einer Rückwand 31 der Einhausung 10 angeordnet und erstreckt sich von der zweiten Zone 15 bis in die dritte Zone 16. Eine hermetische Verbindung hat der zweite Lüftungskanal 28 zur zweiten Zone 15 und nicht zur dritten Zone. Der zweite Lüftungskanal 28 ist in der dritten Zone 16 bevorzugt thermisch isoliert. Insbesondere der dritte Lüftungskanal 29 ist im Innenraum an seitlich angeordnet und erstreckt sich von der zweiten Zone 15 bis in die dritte Zone 16. Eine hermetische Verbindung hat der dritte Lüftungskanal 29 zur zweiten Zone 15 und nicht zur dritten Zone. Der dritte Lüftungskanal 29 ist in der dritten Zone 16 bevorzugt thermisch isoliert. Damit ist die zur Belüftung der zweiten Zone 15 zur Verfügung stehende Außenfläche größer als die Mantelfläche der zweiten Zone 15. Damit ist der Luftwiderstand minimiert und es bedarf einer geringeren Ventilatorleistung.

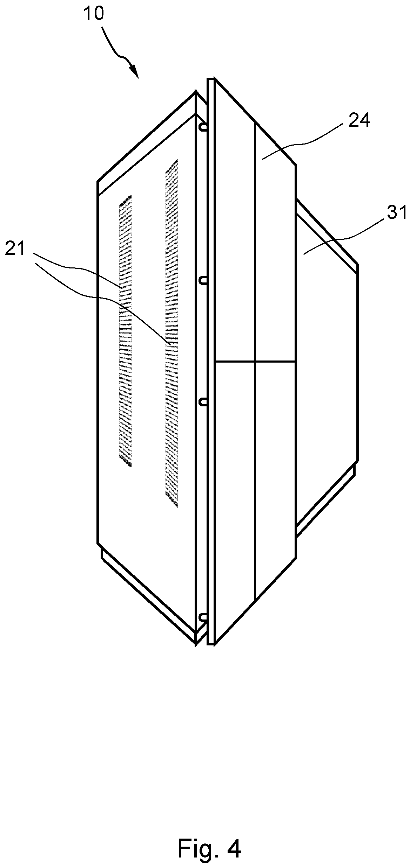

In der Figur 4 ist die erfindungsgemäße Einhausung 10 in einer Seitenansicht schematisch dargestellt. Die Einhausung 10 umfasst bevorzugt ein Leitblech 24. Das Leitblech 24 ist beabstandet zu einer Außenwand, insbesondere zu der Rückwand 31 des Korpus 11 angeordnet. An der Rückwand 31 sind an dieser Stelle bevorzugt Luftauslässe 30 des dritten Lüftungskanals 29 und des vierten Lüftungskanals 33 angeordnet. Das Leitblech 24 dient dazu, dass Wind von der Abluft des zweiten Lüftungskanals 29 ferngehalten wird und diese Abluft ohne vom Wind erzeugten Gegendruck ungehindert austreten kann. Dadurch entsteht kein Gegendruck und Lüfter für die Abluft können leistungsschwächer ausgelegt sein. Die Funktion der technischen Anlage 40 ist damit auch bei hohen Windgeschwindigkeiten sichergestellt.

Das Leitblech 24 ist bevorzugt mehrteilig ausgebildet. Das vereinfacht einen Transport des Leitblechs 24. Bei Wartungsarbeiten ist es anwenderfreundlicher, nur einen Teil des mehrteiligen Leitblechs 24 entfernen zu müssen. Beispielhaft ist das Leitblech 24 hier vierteilig ausgeführt.

Die Einhausung 10 weist bevorzugt einen nicht dargestellten Purgeausgang auf, durch den Wasser aus der Einhausung 10 entweichen kann. Bevorzugt ist das Leitblech 24 in der Weise angeordnet, dass warme Abluft gezielt an den Purgeausgang geführt wird. Damit ist verhindert, dass im Betrieb der Anlage 40 austretendes Wasser gefriert.

Die Einhausung 10 umfasst bevorzugt zumindest einen Wassersammelkanal, der in der Weise positioniert ist, dass Wasser durch den untersten Lüftungskiemen hindurch zu einer Ablaufführung an der Außenwand der Einhausung 10 gelangen kann. Insbesondere weisen der zweite, dritte und vierte Lüftungskanal 28, 29, 33 einen derartigen Wassersammelkanal auf.

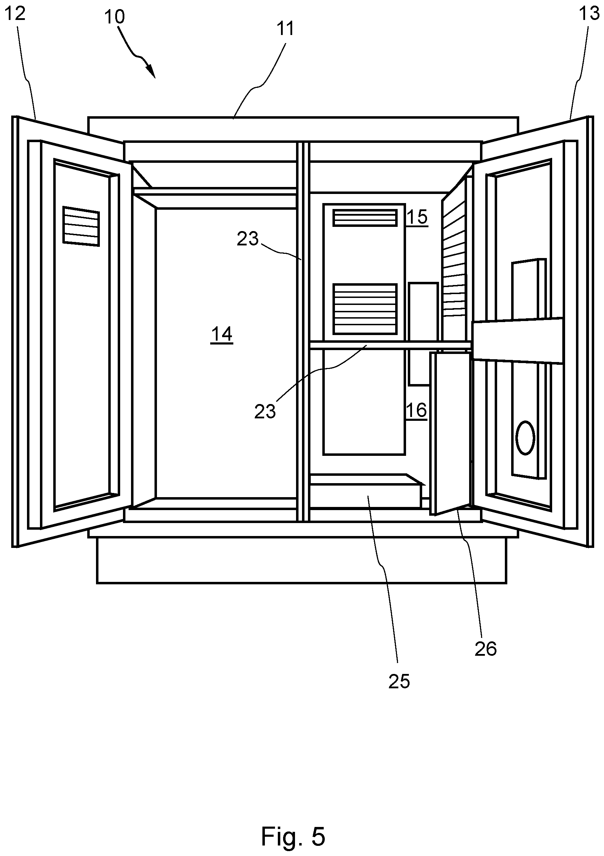

In der Figur 5 sind weitere bevorzugte Merkmale der Einhausung 10 abgebildet. So umfasst die Einhausung 10 insbesondere ein Schwenkteil 26, welches insbesondere um eine vertikale Achse von einer geschlossenen Position in eine offene Position und umgekehrt schwenkbar ist. Das Schwenkteil 26 dient der Anlage 40 insbesondere als Schnittstellenelement. Das Schwenkteil 26 ist bevorzugt in der dritten Zone 16 angeordnet. Es hat den Vorteil, dass dahinter liegende Technik in geöffneter Position sehr leicht zugänglich ist. Eine Wartung, beispielsweise einer in der dritten Zone 16 positionierten Starterbatterie ist somit ohne weiteres möglich. Das Schwenkteil 26 ist bevorzugt in der geschlossenen Position verschließbar. So ist der Zugang zu gefährlichen Komponenten, wie der Starterbatterie zunächst verhindert, da für das Lösen/Wegschwenken ein Werkzeug benötigt wird. Bevorzugt sind sämtliche Schnittstellen auf dem Schwenkteil 26 angebracht. Wenn unterschiedliche Kunden unterschiedliche Schnittstellen haben, muss nur die Schnittstellenbaugruppe angepasst werden und der Rest der Einhausung 10 kann identisch bleiben. Somit ist eine schnelle Anpassung an verschieden Kundenwünsche ermöglicht. Die Modularität ist auch hier sichergestellt.

Zudem umfasst die Einhausung 10 bevorzugt ein Podest 25, welches verschiebbare Aufnahmeelemente aufweist. Das Podest 25 ist bevorzugt in der dritten Zone 16 angeordnet. Die verschiebbaren Aufnahmeelemente sind insbesondere herausziehbare beziehungsweise einschiebbare Schiebeelemente, die insbesondere zur Aufnahme eines Gerüstes für 19" Komponenten, wie 19" Einbaugeräte und/oder 19" Verteilergehäuse ausgebildet sind. Die Komponenten der Anlage 40 lassen sich damit leicht in die Einhausung 10 bringen und zu Servicezwecken herausziehen

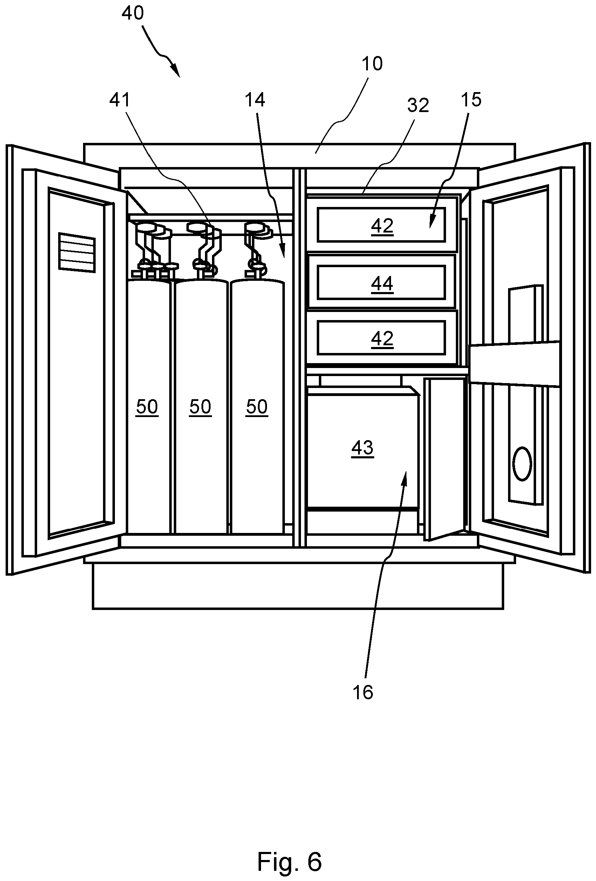

In der Figur 6 ist eine erfindungsgemäße Anlage 40 in einer beispielhaften Ausgestaltung schematisch dargestellt. Die Anlage 40 ist eine technische Anlage 40. Die Anlage 40 ist bevorzugt ein Brennstoffzellensystem oder ein Brennstoffzellensystem als Netzersatzanlage. Die erfindungsgemäße Anlage 40 umfasst die Einhausung 10. Innerhalb der Einhausung 10 sind die übrigen Komponenten der Anlage 40 angeordnet. Die Anlage 40 ist bevorzugt modular aufgebaut.

Die Anlage 40 umfasst zumindest ein in der zweiten Zone 15 angeordnetes Brennstoffzellenmodul 42 und eine in der dritten Zone 16 angeordnete Steuereinheit 43. Insbesondere umfasst die Anlage 40 eine in der ersten Zone 14 angeordnete Anschlussvorrichtung 41. Neben der Steuereinheit 43 ist in der dritten Zone 16 bevorzugt weiteres Equipment angeordnet, insbesondere eine Stromverteilungsvorrichtung, ein Batterieladegerät sowie ein Wechselrichter.

Die Anlage 40 ist dazu ausgebildet, aus Wasserstoff elektrische Energie zu erzeugen. Die Anlage 40 ist bevorzugt für mehrere Betriebsarten ausgebildet. Bevorzugt ist die Anlage für einen Normalbetrieb und für einen Testbetrieb ausgebildet. Beim Normalbetrieb wird die von der Anlage 40 erzeugte elektrische Energie an einen externen Abnehmer abgegeben. Beim Testbetrieb wird die von der Anlage 40 erzeugte elektrische Energie an einen internen Abnehmer abgegeben. Die elektrische Energie stammt dabei von dem Brennstoffzellenmodul 42 und oder aus einer Batterie. Bevorzugt umfasst die Anlage 40 eine Testlasteinheit 45 als internen Abnehmer. Als weiteren internen Abnehmer umfasst die Anlage bevorzugt eine Zusatzheizung. Die Testlasteinheit 45 ist bevorzugt in dem vierten Lüftungskanal 33 angeordnet. Dort ist sie nach Bedarf kühlbar. Die Anlage 40 ist zudem insbesondere dazu ausgebildet, beide Betriebsarten gleichzeitig auszuüben, das heißt einen Teil der erzeugten elektrischen Energie an den externen Abnehmer und gleichzeitig den übrigen Teil der erzeugten elektrischen Energie an die Testlasteinheit 45 abzugeben.

Die Anschlussvorrichtung 41 ist bevorzugt zum Anschluss von Druckbehältern 50 und zur Entnahme des in den Druckbehältern 50 gespeicherten Wasserstoffs ausgebildet. Mittels der Anschlussvorrichtung 41 ist der Wasserstoff aus den Druckbehältern 50 entnehmbar. Die Anschlussvorrichtung 41 ist in der ersten Zone 14 angeordnet. Die erste Zone 14 ist dazu als Hochdruckbereich der Anlage 40 ausgebildet. Die Druckbehälter 50 sind bevorzugt Gasflaschen. Die Anschlussvorrichtung 41 ist bevorzugt modular aufgebaut. Bevorzugt umfasst die Anschlussvorrichtung 41 zwei Flaschenbänke. Je Flaschenbank ist zumindest eine Gasflasche anschließbar. Damit ist der Brennstoffvorrat in zumindest zwei Tranchen aufgeteilt. Die Anschlussvorrichtung 41 ist dazu ausgebildet, zwischen den Anschlussbänken umzuschalten, insbesondere bei einer vordefinierten Druckdifferenz zwischen den Druckbehältern 50. Die dargestellte Anlage 40 umfasst beispielhaft neun Gasflaschen als Druckbehälter 50.

Die Gasflaschen sind insbesondere in der Weise angeschlossen, dass ein erstes Flaschenbündel insbesondere für den Normalbetrieb und ein zweites Flaschenbündel insbesondere für den Testbetrieb bereitstehen. Die Anlage 40 ist insbesondere in der Weise ausgebildet, den Testbetrieb allein mit dem zweiten Flaschenbündel auszuüben. Die Befüllung des ersten Flaschenbündels steht damit ständig für den Normalbetrieb zur Verfügung. Beispielsweise umfasst das erste Flaschenbündel sechs Wasserstoffflaschen für den Normalbetrieb, beispielsweise eine 72-stündige Notstromversorgung, und das zweite Flaschenbündel umfasst drei Wasserstoffflaschen für Testläufe der Anlage 40. In diesem Beispiel ist stets ausreichend Wasserstoff für einen 72-stündigen Normalbetrieb vorhanden ist, da für Testläufe ausschließlich die Testflaschen durch die Umschaltfunktion der Anschlussvorrichtung 41 angesprochen werden. Das System ist mithin geteilt. Zudem ist die Anlage 40 bevorzugt dazu ausgebildet, das zweite Flaschenbündel zusätzlich für den Normalbetrieb zu verwenden.

Das Brennstoffzellenmodul 42 ist wie üblich dazu ausgebildet, aus Wasserstoff elektrische Energie zu generieren. Das Brennstoffzellenmodul 42 ist bevorzugt in der zweiten Zone 15 angeordnet. Die zweite Zone 15 und die dritte Zone 16 sind als Normaldruckbereich der Anlage 40 ausgebildet. Das Brennstoffzellenmodul 42 ist bevorzugt in einem Rack 32 angeordnet, welches es ermöglicht mehrere standardisierte Brennstoffzellenmodule 42 übereinander zu platzieren. Zudem sind die Brennstoffzellenmodule 42 thermisch in der Weise isoliert, dass diese auch bei kaltem Wetter insbesondere bei Minustemperaturen betrieben werden können, ohne dass die zweite Zone 15 zusätzlich zur Abwärme der Brennstoffzellenmodule 42 beheizt werden muss.

Auf eine zusätzliche Luftführung, beispielsweise einen Kanal vom einzelnen Brennstoffzellenmodul 42, kann verzichtet werden. Dadurch ist eine flexiblere Positionierung des oder der Brennstoffzellenmodule 42 in der zweiten Zone ermöglicht und die Bautiefe der Anlage 40 kann geringer dimensioniert sein. Die Anlage 40 lässt sich einfacher für verschiedene Anforderungen konfigurieren. Durch die entfallene individuelle Luftführung und Beheizung ist der Aufbau kostengünstiger zu realisieren und der Wechsel Ausbau/Einbau der Brennstoffzellenmodule 42 ist einfacher zu bewerkstelligen. Es ist zudem eine größere Filterfläche möglich, da die durch den Filter strömende Luft nicht wieder "gesammelt" und zu den Brennstoffzellenmodulen 42 geführt werden muss. Durch die nicht nötige Luftführung und der großen Filterfläche ist der Druckverlust der Zuluft geringer, was es ermöglicht, leistungsschwächere Lüfter zu benutzen. Hierdurch ist es möglich, die Bautiefe geringer auszulegen.

In der abgebildeten Ausgestaltung der Anlage 40 umfasst diese zwei Brennstoffzellenmodule 42. Zwischen diesen Modulen ist hier ein Blindmodul 44 angeordnet. Das Blindmodul 44 nimmt den Raum ein, der bei anderen Konfigurationen der Anlage 40 mit größeren und/oder zusätzlichen Brennstoffzellenmodulen 42 gefüllt wäre. Das Blindmodul 44 dient zudem der besseren thermischen Isolierung der Brennstoffzellenmodule 42. Der Einsatzbereich der Anlage auch für niedrigere Temperaturen erweitert.

Die erfindungsgemäße Anlage 40 ist dafür ausgebildet auch bei sehr tiefen Temperaturen, zum Beispiel - 30 °C, zu arbeiten. Die Anlage 40 ist bevorzugt dazu ausgebildet die Leistung des zumindest einen Brennstoffzellenmoduls 42 und damit dessen Abwärme in Abhängigkeit der Außentemperatur zu steuern. Das zumindest eine Brennstoffzellenmodul 42 ist mithin mit einer bestimmten Mindestleistung betreibbar, die je nach Außentemperatur variiert. Mit sinkender Außentemperatur steigt die Mindestleistung. Bei tiefen Außentemperaturen ist die Leistung des zumindest einen Brennstoffzellenmoduls 42 dadurch steigerbar und die Mindestleistung erzielbar, dass zumindest einer der internen Abnehmer, insbesondere die Testlasteinheit 45 den Anteil der erzeugten elektrischen Energie aufnimmt, den der externe Abnehmer nicht aufnehmen kann. Die Testlasteinheit 45 ist mithin bei Bedarf zuschaltbar. Das zumindest eine Brennstoffzellenmodul 42 wird dadurch mit der Mindestleistung betrieben, die genügend Abwärme liefert, um eine stabile Reaktion aufrechtzuerhalten.

Die Anlage 40 umfasst bevorzugt eine Druckbehältertemperaturmesseinrichtung, die dazu ausgebildet ist, die Temperatur zumindest eines der Druckbehälter 50 zu ermitteln. Die Anlage 40 ist damit bevorzugt dazu ausgebildet, eine Dichtigkeitsprüfung der angeschlossenen Druckbehälter 50 durchzuführen und dabei die Temperatur der Druckbehälter zu berücksichtigen. Insbesondere ist die Anlage 40 dazu ausgebildet, den Druck je Flaschenbank gleichzeitig zu ermitteln und miteinander zu vergleichen. Damit ist die Anlage 40 für zuverlässige Leckageprüfungen ausgebildet. Es ist insbesondere ermöglicht eine aktuelle Druckbehältertemperatur und einen aktuellen Druck einer bestimmten Flaschenbank zu ermitteln. Zusätzlich können diese Werte mit denen eines Druckbehälters 50 der anderen Flaschenbank abgeglichen werden, um eine Leckage aufzuspüren. Da das Druckniveau der einzelnen Druckbehälter 50 Einfluss auf deren Temperaturverhalten hat, ist bevorzugt zusätzlich auch ein Füllstand der betrachteten Druckbehälter 50 ermittelbar. Bevorzugt ist die Anlage dazu ausgebildet, Leckageprüfungen selbstständig durchzuführen.

Die Steuereinheit 43 ist dazu ausgebildet, den Betrieb der Anlage 40 zu steuern beziehungsweise zu regeln. Bevorzugt umfasst die Steuereinheit 43 ein Kommunikationsmodul, womit eine Fernüberwachung der Anlage 40 ermöglicht ist.

### Bezugszeichenliste:

- 10: Einhausung
- 11: Korpus
- 12: Erste Tür
- 13: Zweite Tür
- 14: Erste Zone
- 15: Zweite Zone
- 16: Dritte Zone
- 17: Abdichtung
- 18: Erster Lüftungskanal
- 19: Innenseite
- 20: Außenseite
- 21: Lüftungsgitter
- 22: Lufteinlass
- 23: Trennwand
- 24: Leitblech
- 25: Podest
- 26: Schwenkteil
- 27: Ventilator
- 28: Zweiter Lüftungskanal
- 29: Dritter Lüftungskanal
- 30: Luftauslass
- 31: Rückwand
- 32: Rack
- 33: Vierter Lüftungskanal
- 40: Anlage
- 41: Anschlussvorrichtung
- 42: Brennstoffzellenmodul
- 43: Steuereinheit
- 44: Blindmodul
- 45: Testlasteinheit
- 50: Druckbehälter

## Patentansprüche

1. Einhausung (10) für eine technische Anlage, die einen einen Innenraum aufweisenden Korpus (11) und wenigstens eine Tür (12, 13) umfasst, wobei die Einhausung (10) zumindest eine Trennwand (23) aufweist, die den Innenraum in zumindest zwei Zonen (14, 15, 16) aufteilt, **dadurch gekennzeichnet, dass** die Einhausung (10) zumindest einen Lüftungskanal (18, 28, 29, 33) aufweist, der in wenigstens zwei Zonen (14, 15, 16) hineinragt, jedoch nur mit einer dieser Zonen (14, 15, 16) hermetisch verbunden ist.

2. Einhausung (10) nach Anspruch 1, wobei die Einhausung (10) ein vom Korpus (11) beabstandet angeordnetes Leitblech (24) aufweist.

3. Einhausung (10) nach einem der vorherigen Ansprüche, wobei die Einhausung (10) ein Podest (25) aufweist, welches verschiebbare Aufnahmeelemente umfasst.

4. Einhausung (10) nach einem der vorherigen Ansprüche, wobei die Einhausung (10) ein Schwenkteil (26) aufweist, welches an einer vertikalen Achse schwenkbar gelagert ist.

5. Einhausung (10) nach einem der vorherigen Ansprüche, wobei die Einhausung (10) in einer zweiten Zone (15) ein Rack (32) zur Aufnahme zumindest eines Brennstoffzellenmoduls (42) aufweist.

6. Anlage (40) mit einer Einhausung (10) nach einem der vorherigen Ansprüche, wobei die Anlage (40) ein in einer zweiten Zone (15) angeordnetes Brennstoffzellenmodul (42) und eine in einer dritten Zone (16) angeordnete Steuereinheit (43) umfasst.

7. Anlage (40) nach Anspruch 6, wobei die Anlage eine in einer ersten Zone (14) angeordnete Anschlussvorrichtung (41) für mit Wasserstoff befüllte Druckbehälter (50) aufweist.

8. Anlage (40) nach Anspruch 6 oder 7, wobei die Anlage (40) eine Testlasteinheit (45) aufweist und die Anlage (40) dazu ausgebildet ist, einen Testbetrieb durchzuführen, bei dem von der Anlage (40) erzeugte elektrische Energie von der Testlasteinheit (45) aufgenommen wird.

9. Anlage (40) nach Anspruch 8, wobei die Anlage (40) dazu ausgebildet ist, einen Normalbetrieb oder den Testbetrieb durchzuführen und dazu aus unterschiedlichen Druckbehältern (50) Wasserstoff zu entnehmen.

10. Anlage (40) nach einem der vorherigen Ansprüche, wobei die Anlage (40) eine Druckbehältertemperaturmesseinrichtung aufweist, die dazu ausgebildet ist, die Temperatur zumindest eines der Druckbehälter (50) zu ermitteln.
